# EUROPÄISCHE PATENTSCHRIFT

(11) **EP 0 290 934 B1**
(45) Veröffentlichungstag und Bekanntmachung des Hinweises auf die Patenterteilung: **19.01.1994**
(21) Anmeldenummer: 88107110.4
(22) Anmeldetag: 03.05.1988
(51) Int. Cl.: H04L 12/28

(54) **Verfahren zum Bilden einer Adressentabelle in einem ringförmigen Kommunikationsnetz**
Method of setting up an address table in a ring communication network
Procédé pour la création d'une table d'adresse dans un réseau de commutation annulaire

(30) Priorität: 14.05.1987 DE 3716177; 04.03.1988 DE 3807146
(43) Veröffentlichungstag der Anmeldung: 17.11.1988
(73) Patentinhaber: SIEMENS AKTIENGESELLSCHAFT, 80333 München (DE)
(72) Erfinder: Müller, Rudi, Dr. Phys, D-8038 Gröbenzell (DE); Reichbauer, Hermann, Dipl.-Ing., D-8000 München 70 (DE); Riccato, Aldo, Dr. rer. nat., D-8000 München 70 (DE)

(56) Entgegenhaltungen:
- EP-A- 0 115 761
- EP-A- 0 135 037
- COMPUTER NETWORKS AND ISDN NETWORKS, Band 11, Nr. 2, Februar 1986, Seiten 133-146, Amsterdam, NL; W.M. LOUCKS et al.: "Implementation of a dynamic address assignment protocol in a local area networks"
- IEEE TRANSACTIONS ON COMMUNICATIONS, Band COM-34, Nr. 1, January 1986, Seiten 31-37, New York, US; I.S. GOPAL et al.: "Dynamic address assignment in broadcast networks"

## Beschreibung

Die Erfindung betrifft ein Verfahren zum Bilden einer Adressentabelle in einem ringförmigen Kommunikationsnetz mit mindestens zwei jeweils mit einer Zugriffseinrichtung ausgestatteten Teilnehmereinrichtungen, wobei die Informationen paketweise übermittelt werden und in einer ursprünglich Paketinformationen bildenden Teilnehmereinrichtung vor dem Aussenden einem Adreßerkennungsbit einer jeder Paketinformation zugeordneten Paketrahmeninformation eine definierte binäre Information zugeordnet wird und in einer der folgenden Teilnehmereinrichtungen nach dem Übereinstimmen der in der Paketrahmeninformation angegebenen Ziel- bzw. Gruppenadresse mit der jeweils eigenen Teilnehmereinrichtungs-Adresse bzw. Gruppenadresse die binäre Information des Adreßerkennungsbits geändert wird.

In ringförmigen Netzen mit paketweiser Informationsübermittlung muß von einer aktuell sendenden Teilnehmereinrichtung in die Paketrahmeninformation sowohl die Ursprungs- als auch die Zieladresse eingefügt werden. Die erforderlichen Zieladressen können in den Teilnehmereinrichtungen jeweils einer Adressentabelle entnommen werden, die die Adressen aller an das ringförmige Netz angeschlossenen Teilnehmereinrichtungen aufweist.

Um geeignete Konfigurations- und Wiederherstellungsmaßnahmen in gestörten ringförmigen Netzen durchführen zu können, sollen neben anderen wichtigen Entscheidungskriterien auch Informationen über die Positionen aller Teilnehmereinrichtungen in jeder Teilnehmereinrichtung verfügbar sein.

Aus EP-A-0 135 037 ist ein Verfahren zum bilden einer Adressentabelle in einem ringförmigen Kommunikationsnetz bekannt. Anhand Adressentabelle können das mehrfache Auftreten gleider Adressen erkannt und die Systemstruktur ermittelt werden.

Die der Erfindung zugrundeliegende Aufgabe besteht darin, dessen unter Einbeziehung von in der Praxis bereits in ringförmigen Netzen implementierten Verfahren in wirtschaftlicher Weise - d. h. mit sehr geringem Software-Aufwand - eine Tabelleninformation zu schaffen, die einerseits die Adressen aller betriebsbereiten Teilnehmereinrichtungen in einem ringförmigen Netz enthält und aus der andererseits die Positionen dieser Teilnehmereinrichtungen in einem ringförmigen Netz direkt zu entnehmen sind. Diese Aufgabe wird im Zusammenhang mit dem eingangs definierten Verfahren durch die kennzeichnenden Merkmale des Anspruches 1 gelöst.

Als besonderer Vorteil des erfindungsgemäßen Verfahrens ist das teilweise Einbeziehen von ANSI/IEEE-standardisierten Übermittlungsprozeduren für Informationen in ringförmigen Netzen anzusehen. Gemäß einer Teilprozedur, siehe Punkt 3.2.8 Frame Struktur, einer der standardisierten Prozeduren - IEEE-Standard 802.5 - wird in einer Teilnehmereinrichtung, die ursprünglich eine Paketinformation bildet, einem Adreßerkennungsbit - auch als A-Bit definiert - eine binäre "0"-Information zugeordnet, wobei das A-Bit am Ende der Paketinformationen eingefügt wird. Empfängt eine der folgenden Teilnehmereinrichtungen eine Paketinformation, deren angegebene Ziel- bzw. Gruppenadresse mit der jeweils eigenen Teilnehmereinrichtungs-Adresse bzw. Gruppenadresse übereinstimmt, so markiert die jeweilige Teilnehmereinrichtung das A-Bit mit 'Adresse erkannt', indem sie die binäre "0"-Information in eine binäre "1"-Information ändert. Mittels dieses Verfahren teilt somit eine 'Ziel-Teilnehmereinrichtung' einer 'Ursprungs-Teilnehmereinrichtung' mit, daß sie die Adresseninformationen der jeweiligen Paketinformationen erkennen konnte. Im Falle einer gestörten 'Ziel-Teilnehmereinrichtung' kann die 'Ursprungs-Teilnehmereinrichtung' durch Auswertung dieses A-Bits und eines weiteren Bits - C-Bit 'frame copied bit' - den Betriebszustand der 'Ziel-Teilnehmereinrichtung ermitteln. Bei Einbeziehung dieses Adreßerkennungsverfahrens in das erfindungsgemäße Verfahren sendet eine eine 'Ursprungs-Teilnehmereinrichtung' repräsentierende und zumindest zeitweise aktuell das ringförmige Netz überwachende Teilnehmereinrichtung anstelle einer gezielt adressierten Paketinformation eine Rundsendepaketinformation - Broadcast Information - aus. Da bei Rundsendepaketinformationen die Adressen aller Teilnehmereinrichtungen als einer Gruppenadresse zugehörig betrachtet werden, ändert jeweils diejenige Teilnehmereinrichtung, die der ursprünglich Paketinformationen bildenden Teilnehmereinrichtung folgt, die binäre Information des A-Bits. Sendet nun eine aktuell das ringförmige Netz überwachende Teilnehmereinrichtung eine Rundsendepaketinformation, deren Informationsfeld eine Adressenmeldeaufforderung und gegebenenfalls die eigene Adresse aufweist, so ändert die folgende Teilnehmereinrichtung die binäre Information des A-Bits. Diese folgende Teilnehmereinrichtung bildet nun aufgrund der Aufforderung, ihre Adresse zu melden, ihrerseits eine Paketinformation, deren Datenfeld eine Adressenmeldeaufforderung und die eigene oder die übermittlungsrichtungsgemäß vorhergehende Teilnehmereinrichtungs-Adresse enthält. Die folgenden Teilnehmereinrichtungen bilden jeweils bei Empfang eines mit binärer "O"-Information versehenen A-Bits jeweils eine weitere Rundsendepaketinformation, deren Informationsfeld jeweils eine Adressenmeldeaufforderung und die Adressen der vorhergehenden Teilnehmereinrichtungen - diese Adresseninformation wurde jeweils dem Informationsfeld der Rundsendepaketinformation entnommen, deren A-Bit eine binäre "O"-Information aufweist - sowie der eigenen oder der übermittlungsrichtungsgemäß vorhergehenden Teilnehmereinrichtungs-Adresse enthält. In der das ringförmige Netz überwachenden Teilnehmereinrichtung werden die empfangenen Rundsendepaketinformationen solange nicht bewertet, bis eine Rundsendepaketinformation mit einem mit einer binären "O"-Information markierten A-Bit empfangen wird. Dies bedeutet, daß von jeder Teilnehmereinrichtung eine Rundsendepaketinformation gebildet bzw. ihre Teilnehmereinrichtungs-Adresse in das Informationsfeld eingetragen wurde. Somit liegt im Informationsfeld derjenigen Rundsendepaketinformation, deren A-Bit eine binäre "O"-Information aufweist, eine vollständige Adressentabelle, gegebenenfalls beginnend mit der eigenen Teilnehmereinrichtungs-Adresse, vor.

Das erfindungsgemäße Verfahren ist äquivalent mittels einer weiteren bekannten und standardisierten Übermittlungsprozedur - siehe ANSI-Standard X 3.139 "Fiber Distributed Data Interface (FDDI), Token Ring Access Method" - implementierbar. Hierbei sind die Adreßerkennungs- und die Adresseninformationen in die entsprechenden, geringfügig unterschiedlich angeordneten Informationsfelder einer Paketinformation einzutragen.

Ob eine Realisierung gewählt wird, bei der die jeweils folgende Teilnehmereinrichtung die Teilnehmereinrichtungs-Adresse der vorhergehenden Teilnehmereinrichtung oder die jeweilige Teilnehmereinrichtung ihre eigene Teilnehmereinrichtungs-Adresse den empfangenen Adreßinformationen hinzufügt (siehe Anspruch 2 und 3), hängt, da beide Varianten als technisch gleichwertig anzusehen sind, weitgehend von den sonstigen für andere Aufgaben verwendeten Verfahren und Prozeduren ab und ist dementsprechend auszuwählen.

Ein weiterer Vorteil der Erfindung besteht darin, daß die Reihenfolge der vorliegenden Adreßinformationen in der Adreßtabelle der Reihenfolge der Teilnehmereinrichtungen im ringförmigen Netz entspricht, wodurch die Position jeder Teilnehmereinrichtung eindeutig bestimmt ist.

Gemäß einer vorteilhaften Weiterbildung der Erfindung - siehe Anspruch 4 - ist in der das ringförmige Netz überwachenden Teilnehmereinrichtung TLN2-M in das Informationsfeld jeder mit einer Adressenmeldeaufforderung versehenen Rundsendepaketinformation eine Numerierungsinformation eintragbar, die von den weiteren Teilnehmereinrichtungen des ringförmigen Netzes unverändert weitergeleitet wird. Mittels dieser Numerierungsinformation und dem Erkennen, daß die erste Adreßinformation der empfangenen Adressentabelle die eigene Teilnehmereinrichtungs-Adresse darstellt, kann eindeutig eine empfangene einer abgesandten, mit einer Adressenmeldeaufforderung versehenen Rundsendepaketinformation zugeordnet werden. Diese Maßnahme stellt eine zusätzliche Sicherungsmaßnahme dar, um im Falle von Ringnetzstörungen während des Adressenmeldens noch eindeutige Zuordnungen von abgesandten und empfangenen Rundsendepaketinformationen in der das ringförmige Netz überwachenden Teilnehmereinrichtung zu ermöglichen.

Weitere vorteilhafte Weiterbildungen der Erfindung gemäß den Patentansprüchen 5 und 6 bestehen darin, daß die Teilnehmereinrichtungs-Adreßinformation mittels der jeweiligen Teilnehmereinrichtungs-Adresse und weiteren Subteilnehmereinrichtungs-Adressen bzw. zusätzlich durch eine teilnehmereinrichtungsinterne Konfigurationsinformation gebildet werden kann. Somit wird das erfindungsgemäße Verfahren für die Übermittlung weiterer Adreß- bzw. Konfigurationsinformationen an eine das ringförmige Netz überwachende Teilnehmereinrichtung mitbenutzt; damit liegen in der ein ringförmiges Netz überwachenden Teilnehmereinrichtung alle wesentlichen Informationen vor, die für den Betrieb und gegebenenfalls weitere Konfigurationsvorgänge erforderlich sind.

Im Gegensatz zur standardisierten Übermittlungsprozedur gemäß ANSI/IEEE-Standard 802.5 wird nach ANSI-Standard X 3.139 nach einem Konfigurationsvorgang keine aktuelle das ringförmige Netz überwachende Teilnehmereinrichtung bestimmt. Um jedoch zu ermitteln, welche der im ringförmigen Netz angeordneten Teilnehmereinrichtungen erstmals auf das ringförmige Netz zugreifen dürfen, wird nach jeder Störung im ringförmigen Netz - beispielsweise nach einer Konfigurationsänderung - ein Zugriffswettbewerb (Token Claiming) durchgeführt. In der einen, diesen Zugriffswettbewerb gewinnenden Teilnehmereinrichtung wird der - einzige - "Token" für das ringförmige Netz generiert und ausgesandt. Diese im ringförmigen Netz eine zentrale Aufgabe durchführende Teilnehmereinrichtung übernimmt zumindest zeitweise die Überwachung des ringförmigen Netzes - siehe Anspruch 7 - und initiiert beziehungsweise überwacht das Bilden einer Adressentabelle.

Während des Bildens einer Adressentabelle können kurzzeitige Überlastzustände in den jeweiligen Teilnehmereinrichtungen auftreten. In diesen Fällen bleibt zwar die Teilnehmereinrichtung aktuell an das ringförmige Netz geschaltet, jedoch können die empfangenen Paketinformationen beispielsweise aufgrund eines Pufferspeicherüberlaufes nicht mehr kopiert - d. h. nicht mehr in den Pufferspeicher übernommen - werden. Um derartige Betriebszustände der jeweiligen Teilnehmereinrichtungen zu erkennen, wird in der die ursprünglich die Rundsendepaketinformationen bildenden Teilnehmereinrichtung ein mit einer vorgegebenen binären Information versehenes Kopierbit eingefügt, dessen binäre Information ausschließlich von der folgenden Teilnehmereinrichtung nach dem Kopieren der Paketinformation geändert wird. Einer ursprünglich die Rundsendepaketinformation aussendenden Teilnehmereinrichtung zeigt ein unverändertes Kopierbit an, daß die folgende Teilnehmereinrichtung die Paketinformationen nicht kopieren konnte. Dieses an sich aus den eingangs erläuterten Übermittlungsprozeduren bekannte sicherungstechnische Verfahren ist besonders vorteilhaft bei dem erfindungsgemäßen Verfahren einzusetzen - siehe Anspruch 8. Hierbei wird nach Empfang einer Rundsendepaketinformation in der jeweiligen Teilnehmereinrichtung erneut eine Rundsendepaketinformation gebildet und ausgesendet. Nach einem n-maligen Aussenden - 'n' kann anwendungsorientiert bestimmt werden - von Rundsendepaketinformationen kann die folgende Teilnehmereinrichtung als "gestört" betrachtet und beispielsweise ein Konfigurieren eingeleitet werden.

Aufgrund von Störungen oder fehlerhaften Bedienereingaben können Teilnehmereinrichtungsadressen doppelt oder mehrfach in einem ringförmigen Netz auftreten. Da diese Teilnehmereinrichtungsadressen zur vermittlungs- und sicherungstechnischen Steuerung der einzelnen Teilnehmereinrichtungen und des ringförmigen Netzes herangezogen werden, sollen ein ungewolltes Auftreten von gleichen Teilnehmereinrichtungsadressen umgehend erkannt und entsprechende Maßnahmen eingeleitet werden. Besonders vorteilhaft ist nun ein Feststellen des Auftretens derselben Teilnehmereinrichtungsadresse - siehe Anspruch 10 - vor jedem Aussenden einer Rundsendepaketinformation während des Bildens einer Adressentabelle einzuleiten - siehe Anspruch 9 -, da hierdurch vor dem Weiterleiten der jeweils eigenen Teilnehmereinrichtungsadresse feststellbar ist, ob diese Teilnehmereinrichtungsadresse doppelt oder mehrfach im ringförmigen Netz auftritt und die jeweilige Teilnehmereinrichtung umgehend in Abhängigkeit von ihrer Anschaltedauer und der Anschaltedauer der Teilnehmereinrichtung mit gleicher Adresse vom ringförmigen Netz geschaltet wird bzw. angeschaltet bleibt. Das Feststellen des Auftretens derselben Teilnehmereinrichtungsadresse wird nach Vorliegen einer Adreßtestanforderung der jeweiligen Teilnehmereinrichtung eingeleitet. In der Teilnehmereinrichtung wird eine Adreßtest-Paketinformation gebildet und ausgesandt - siehe Anspruch 10. Hierbei ist sowohl im Ursprungs- als auch im Zieladreßfeld der Adreßtest-Paketinformation die gleiche eigene Adresse eingetragen. Empfängt diese Teilnehmereinrichtung die von ihr ausgesandten Adreßtest-Paketinformationen unverändert, so ist ihre Adresse einmalig im ringförmigen Netz vorhanden. Empfängt diese Teilnehmereinrichtung eine Adreßtestantwort-Paketinformation, so ist ihre Adresse zumindest doppelt vorhanden. Der Empfang einer Adreßtestantwort-Paketinformation bewirkt in der jeweiligen Teilnehmereinrichtung ein Abschalten vom ringförmigen Netz. Die Adreßtestantwort-Paketinformation wird von derjenigen Teilnehmereinrichtung im ringförmigen Netz gebildet und ausgesandt, die dieselbe Teilnehmereinrichtungsadresse wie die die ursprünglich die Adreßtest-Paketinformationen aussendende Teilnehmereinrichtung aufweist. Diese Teilnehmereinrichtung entfernt des weiteren die ursprünglich ausgesandten Adreßtest-Paketinformation vom ringförmigen Netz. Anschließend wird die Teilnehmereinrichtung in Abhängigkeit von ihrer Anschaltedauer entweder vom ringförmigen Netz geschaltet oder im ringförmigen Netz belassen. Nur im Falle des Verbleibens im ringförmigen Netz wird von der mit derselben Teilnehmereinrichtungsadresse versehenen Teilnehmereinrichtung eine Adreßtestantwort-Paketinformation gebildet und an die ursprünglich die Adreßtest-Paketinformationen sendende Teilnehmereinrichtung übermittelt. Wird die mit derselben Teilnehmereinrichtungsadresse versehene Teilnehmereinrichtung vom ringförmigen Netz geschaltet, wird weder die ursprünglich ausgesandte Adreßtest- noch die Adreßtestantwort-Paketinformation weitergeleitet. In diesem Falle empfängt die ursprünglich die Adreßtest-Paketinformationen aussendende Teilnehmereinrichtung innerhalb eines vorgegebenen Überwachungszeitraumes keine Paketinformationen. Da in der ursprünglich die Adreßtest-Paketinformationen aussendenden Teilnehmereinrichtung nicht unterschieden werden kann, ob eine Ringnetzstörung oder eine nicht vom ringförmigen Netz geschaltete Teilnehmereinrichtung mit gleicher Adresse vorliegt, wird nach Ablauf der Überwachungszeit das Bilden einer Adressentabelle neu eingeleitet. Der wesentliche Vorteil, das Feststellen des Auftretens derselben Teilnehmereinrichtungsadresse in einem ringförmigen Netz während des Bildens einer Adressentabelle durchzuführen, ist darin zu sehen, daß nur Teilnehmereinrichtungen bzw. deren Adressen in die Adressentabelle aufgenommen werden, deren Teilnehmereinrichtungsadresse nicht zwei- oder mehrfach in einem ringförmigen Netz vorhanden sind. Des weiteren wird durch das im ringförmigen Netz sequentiell durchgeführte Adreßmelden gewährleistet, daß jeweils nur eine einzige Teilnehmereinrichtung ein Feststellen von gleichen Teilnehmereinrichtungsadressen durchführt.

Gemäß einer weiteren vorteilhaften Weiterbildung - siehe Anspruch 11 - wird in einer die ursprünglich die Adreßtest-Paketinformation aussendende Teilnehmereinrichtung nach n-maligem Aussenden einer Adreßtest-Paketinformation und n Überwachungszeiten, in denen weder die von ihr ausgesandten Adreßtest-Paketinformationen noch Adreßtestantwort-Paketinformationen empfangen wurden, erneut das Bilden einer Adressentabelle eingeleitet. Durch das n-malige Aussenden der Adreßtest-Paketinformation wird in einer die gleiche Teilnehmereinrichtungsadresse aufweisenden Teilnehmereinrichtung, die zwar die Adreßtest-Paketinformation erkennen und entfernen, mangels verfügbarer Hardware- und Software-Resourcen jedoch keine Adreßtestantwort-Paketinformation bilden und aussenden konnte, n mal das Bewerten der empfangenen Adreßtest-Paketinformation bzw. das Bilden und Aussenden einer Adreßtestantwort-Paketinformation versucht. Nach n Versuchen - n hängt von der gewünschten Fehlererkennungszeit ab - wird in der jeweiligen Teilnehmereinrichtung jedoch erneut das Bilden einer Adressentabelle eingeleitet.

Gemäß einer vorteilhaften Weiterbildung der Erfindung - siehe Anspruch 12 - wird sowohl in die Adreßtest- als auch in die Adreßtestantwort-Paketinformation in der jeweiligen die Paketinformation aussendenden Teilnehmereinrichtung im Sinne des eindeutigen Erkennens einer von ihr ausgesandten Paketinformation aus mehreren empfangenen, die eigene Teilnehmereinrichtungsadresse aufweisenden Paketinformationen eine Kennungsinformation eingefügt. Mittels dieser Kennungsinformation kann eindeutig eine empfangene einer abgesandten Adreßtest-Paketinformation zugeordnet werden. Dies stellt eine zusätzliche Sicherungsmaßnahme dar, um während des Feststellens von gleichen Teilnehmereinrichtungsadressen im ringförmigen Netz noch eindeutigen Zuordnungen von ausgesandten und empfangenen Adreßtest- bzw. Adreßtestantwort-Paketinformationen in der jeweiligen Teilnehmereinrichtung zu ermöglichen. Die Kennungsinformation kann beispielsweise in mit Zufallsgeneratoren ausgestatteten Einrichtungen gebildet werden.

Die Anschaltedauer einer Teilnehmereinrichtung am ringförmigen Netz bestimmt, ob diese nach dem Feststellen des Auftretens derselben Teilnehmereinrichtungsadresse im ringförmigen Netz verbleibt oder von diesem geschaltet wird. Die Anschaltedauer kann durch unterschiedliche Zeiten oder das unterschiedliche Zeitspannen repräsentierende Auftreten veränderter Betriebszustände einer Teilnehmereinrichtung definiert werden. Beispielsweise wird eine Teilnehmereinrichtung nach dem Auftreten derselben Teilnehmereinrichtungsadresse vom ringförmigen Netz geschaltet, wenn diese den Betriebszustand "neu angeschaltet" aufweist. Eine Teilnehmereinrichtung befindet sich im Betriebszustand "neu angeschaltet", solange ihre Anschaltedauer am ringförmigen Netz beispielsweise unter einer vorgegebenen Zeitspanne liegt. Eine weitere Möglichkeit der Bestimmung des Betriebszustandes "neu angeschaltet" ist darin zu sehen, daß die Teilnehmereinrichtung erstmals oder nach einer Ringnetzstörung wieder an das ringförmige Netz geschaltet wird. Bei Einsatz des erfindungsgemäßen Verfahrens zum Bilden einer Adressentabelle sendet die das ringförmige Netz aktuell überwachende - zumindest zeitweise - Teilnehmereinrichtung nach Ablauf des Verfahrens jeder Teilnehmereinrichtung die aktuelle Adressentabelle zu. Während dieser Zeitspanne, in der die jeweilige Teilnehmereinrichtung noch keine Adressentabelle besitzt und empfangen hat, kann die jeweilige Teilnehmereinrichtung den Betriebszustand "neu angeschaltet" einnehmen. Durch diese besonders vorteilhafte Bestimmung des Betriebszustandes "neu angeschaltet" ist nach dem Feststellen des Auftretens zweier oder mehrerer gleicher Teilnehmereinrichtungsadressen im ringförmigen Netz ein sofortiges Abschalten der Teilnehmereinrichtung möglich, da die als "neu angeschaltet" bestimmte Teilnehmereinrichtung ihre Adresse noch nicht gemeldet hat und somit ein aktuelles Bilden einer Adressentabelle ohne Unterbrechung fortgeführt werden kann.

Nach einer weiteren vorteilhaften Ausgestaltung der Erfindung wird von der zumindest zeitweise aktuell das ringförmige Netz überwachenden Teilnehmereinrichtung eine Rundsendepaketinformation gebildet und ausgesandt. Von allen im ringförmigen Netz angeordneten Teilnehmereinrichtungen wird aus der empfangenen Rundsendepaketinformation die aktuelle Adressentabelle kopiert - siehe Anspruch 13. Als besonders vorteilhaft ist das Einfügen eines Kopieranzeigebits in die Rundsendepaketinformation - siehe Anspruch 14 - anzusehen, da hierdurch nach dem Empfang der Rundsendepaketinformation in der die ursprünglich die Rundsendepaketinformation aussendenden Teilnehmereinrichtung mit geändertem Kopieranzeigebit umgehend feststellbar ist, ob eine oder mehrere Teilnehmereinrichtungen die aktuelle Adressentabelle nicht kopieren konnten. Hierbei wird von der ursprünglich die Rundsendepaketinformation aussendenden Teilnehmereinrichtung dem Kopieranzeigebit eine vorgegebene binäre Information zugeordnet, die von einer der folgenden im ringförmigen Netz eingefügten Teilnehmereinrichtungen geändert und von allen nachfolgenden Teilnehmereinrichtungen nicht mehr geändert wird, sofern sie die in der Rundsendepaketinformation enthaltene Adressentabelle nicht kopieren konnte - z. B. wegen Pufferspeicherüberlauf. Wird nun in der das ringförmige Netz überwachenden Teilnehmereinrichtung festgestellt, daß die Adressentabelle von einer Teilnehmereinrichtung nicht kopiert werden konnte, so wird die Rundsendepaketinformation erneut ausgesendet. Nach n-maligem Aussenden einer Rundsendepaketinformation - kann anwenderorientiert gewählt werden - wird die Adressentabelle mittels gezielt adressierter Paketinformation an die im ringförmigen Netz eingefügten Teilnehmereinrichtungen übermittelt. Hierdurch ist feststellbar, welche der Teilnehmereinrichtungen die Adressentabelle nicht kopieren konnte.

Im folgenden wird ein Ausführungsbeispiel der Erfindung anhand von Zeichnungen näher erläutert. Dabei zeigen:
- Fig. 1: Schematisch ein ringförmiges Netz einschließlich der für das Bilden einer Adressentabelle relevanten Rundsendepaketinformationen,
- Fig. 2: schematisch ein ringförmiges Netz einschließlich der zum Feststellen des Auftretens derselben Teilnehmereinrichtungsadresse relevanten Paketinformationen und
- Fig. 3: ein Blockschaltbild einer Teilnehmereinrichtung.

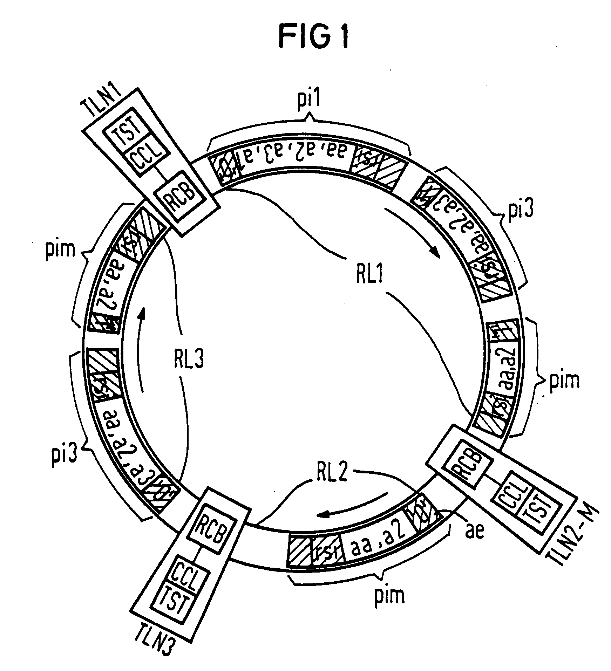

Figur 1 zeigt die zur Erläuterung notwendigen Systemkomponenten eines ringförmigen Netzes. In einer Ringleitung RL sind beispielhaft drei Teilnehmereinrichtungen TLN1...TLN3 eingefügt. Die aus drei Abschnitten gebildete Ringleitung RL1...RL3 kann mittels Lichtwellenleiter oder Koaxialkabel realisiert werden. Die drei Ringleitungsabschnitte RL1...RL3 verbinden jeweils in den Teilnehmereinrichtungen TLN angeordnete Ringkoppeleinrichtungen RCB - ein ringförmiges Netz bildend - untereinander. Die Ringkoppeleinrichtungen RCB enthalten je nach Realisierung der Ringleitung RL entsprechende Sende- bzw. Empfangseinrichtungen. Eine jeder Teilnehmereinrichtung TLN zugeordnete Zugriffseinrichtung CCL ist über eine mehrpolige Stichleitung SL jeweils mit der Ringkoppeleinrichtung RCB verbunden. Diese Zugriffseinrichtungen CCL dienen im wesentlichen der Steuerung der in dem jeweiligen ringförmigen Netz verwendeten Übermittlungsprozedur. Die Ringübermittlungsprozedur entspricht beispielsweise der im ANSII/IEEE-Standard 802.5 festgelegten Token Ring-Übermittlungsprozedur oder einer weiteren Ringübermittlungsprozedur, die jedoch zumindest die Verfahrensschritte und Definitionen nach Kapitel 3.2.8 'Frame Status' des ANSI/IEEE-Standards 802.5 aufweisen muß. Dies ist erforderlich, da das erfindungsgemäße Verfahren die unter dem Kapitel 3.2.8 erläuterten Verfahrensschritte und Definitionen mit einbezieht. Diese Verfahrensschritte und Definitionen beziehen sich auf ein Adreßerkennungsverfahren, bei dem eine 'Ziel-Teilnehmereinrichtung' mittels einer Informationsänderung eines Adreßerkennungsbits, insbesondere einer 'Ursprungs-Teilnehmereinrichtung' sowie den restlichen Teilnehmereinrichtungen, mitteilt, daß sie die in den Adreßinformationsfeldern enthaltenen Adreßinformationen erkannt hat. Eine wiederum in jeder Teilnehmereinrichtung TLN angeordnete Teilnehmereinrichtungs-Steuerung TST koordiniert alle in einer Teilnehmereinrichtung TLN implementierten Verfahren.

Nach einem Konfigurationsvorgang in dem ringförmigen Netz sei beispielhaft die zweite Teilnehmereinrichtung TLN2 bestimmt, das Monitorring, d. h. das Überwachen des ringförmigen Netzes, durchzuführen, weshalb diese zweite Teilnehmereinrichtung TLN2 als 'Monitor-Teilnehmereinrichtung' TLN2-M bezeichnet wird. Des weiteren sei angenommen, daß in dieser 'Monitor-Teilnehmereinrichtung' TLN2-M und den beiden weiteren Teilnehmereinrichtungen TLN1, TLN3 Paketinformationen pi gemäß dem ANSI/IEEE-Standard 802.5, Kapitel 3, generiert werden. Somit werden zwei unterschiedliche Paketinformationen pi - eine Token-Paketinformation und eine Paketinformation pi für die Nachrichtenübertragung im weiteren mit Paketinformationen pi bezeichnet - gebildet. Eine Paketinformation pi setzt sich aus einer Paketrahmeninformation und einem Informationsfeld zusammen. Die Paketrahmeninformation - in der Zeichnung mittels einer Schraffur dargestellt - enthält laut ANSI/IEEE-Standard, Protokoll 802.5, Kapitel 3, eine Rahmenbeginninformation, eine Rahmenendeinformation, eine Rahmensteuer- und Rahmenüberprüfungsinformation sowie jeweils ein Informationsfeld, in dem die Ziel- bzw. Ursprungs-Adresse übermittelt wird. Nach einer dem Konfigurationsvorgang folgenden Reaktionszeit leitet die 'Monitor-Teilnehmereinrichtung' das Bilden einer Adressentabelle ein. Hierzu bildet die 'Monitor-Teilnehmereinrichtung' TLN2-M eine Paketinformation pi in der Art, daß das 'Ziel-Adressen-Informationsfeld' eine Rundsendeinformation rsi und das Informationsfeld eine Adressenmeldeaufforderung aa sowie die eigene Teilnehmereinrichtungs-Adresse a2 enthält. Des weiteren wurde in der 'Monitor-Teilnehmereinrichtung' TLN2-M einem in der Paketrahmenendeinformation eingebetteten Adreßerkennungsbit ae eine binäre "O"-Information zugeordnet.

Die so in der 'Monitor-Teilnehmereinrichtung' TLN2-M gebildete Paketinformation pim wird in Übermittlungsrichtung - durch einen Pfeil im entsprechenden Ringleitungsabschnitt RL dargestellt - über den Ringleitungsabschnitt RL2 zur dritten Teilnehmereinrichtung TLN3 übermittelt. Diese dritte Teilnehmereinrichtung TLN3 reagiert auf den Empfang dieser Paketinformation pim wie folgt:
- Sie stellt fest, daß es sich um eine Rundsende-Paketinformation handelt, daß das Informationsfeld eine Adressenmeldeaufforderung aa enthält und das Adreßerkennungsbit ae eine binäre "O"-Information aufweist;
- sie ändert die Information des Adreßerkennungsbits ae in der von der 'Monitor-Teilnehmereinrichtung' TLN2-M empfangenen Paketinformation pim und sendet diese ansonsten unverändert über den dritten Ringleitungsabschnitt RL3 zur ersten Teilnehmereinrichtung TLN1;
- sie bildet eine weitere Paketinformation pi3 in der Art, daß sie dem Adreßerkennungsbit ae eine binäre "O"-Information zuordnet, mittels Eintrag einer Rundsendeinformation rsi in das Zieladressen-Informationsfeld die Paketinformation pi als Rundsende-Paketinformation bestimmt und in das Informationsfeld der Paketinformation pi die empfangene Adreßinformation a2 einträgt und die eigene Teilnehmereinrichtungs-Adresse a3 hinzufügt.

Diese so in der dritten Teilnehmereinrichtung TLN3 gebildete Paketinformation pi3 gelangt ebenfalls über den Ringleitungsabschnitt RL3 zur ersten Teilnehmereinrichtung TLN1. Diese erste Teilnehmereinrichtung TLN1 reagiert auf den Empfang der beiden Paketinformationen pim, pi3 wie folgt:
- Sie erkennt, daß das Adreßerkennungsbit ae in der von der 'Monitor-Teilnehmereinrichtung' TLN2-M ursprünglich gesendeten Paketinformation pim eine binäre "1"-Information aufweist, worauf sie diese Paketinformation pim sofort an den ersten Ringleitungsabschnitt RL1 und somit an die 'Monitor-Teilnehmereinrichtung' TLN2-M weiterleitet;
- sie erkennt, daß es sich bei der von der dritten Teilnehmereinrichtung TLN3 empfangenen Paketinformation pi3 um eine Rundsende-Paketinformation handelt, daß das Adreßerkennungsbit ae in dieser Paketinformation pi3 eine binäre "O"-Information aufweist und daß im Informationsfeld eine Adressenmeldeaufforderung aa und eine Teilnehmereinrichtungs-Adresse a2, a3 eingefügt sind. Da diese erste Teilnehmereinrichtung TLN1 in Übermittlungsrichtung der dritten Teilnehmereinrichtung TLN3 folgt, ändert sie die binäre "O"-Information des Adreßerkennungsbits ae in eine binäre "1"-Information und sendet die empfangene Paketinformation pi3 ansonsten unverändert über den ersten Ringleitungsabschnitt RL1 an die 'Monitor-Teilnehmereinrichtung' TLN2-M weiter;
- nach dem Erkennen der Adressenmeldeaufforderung aa in der von der dritten Teilnehmereinrichtung TLN3 empfangenen Paketinformation pi3 wird in der ersten Teilnehmereinrichtung TLN1 eine weitere Paketinformation pi1 in der Art gebildet, daß dem Adreßerkennungsbit ae dieser Paketinformation pi1 eine binäre "O"-Information zugeordnet wird, daß diese Paketinformation pi1 mittels eines Eintrags einer Rundsendeinformation rsi in das 'Zieladressen'-Informationsfeld als Rundsende-Paketinformation definiert wird und daß in das Informationfeld wiederum eine Adressenmeldeaufforderung aa, die empfangenen Adresseninformationen a2, a3 der dritten Teilnehmereinrichtung TLN3 und anschließend die Adresse a1 der eigenen Teilnehmereinrichtung TLN1 eingefügt wird und die so gebildete Paketinformation pi1 wiederum über den Ringleitungsabschnitt RL1 an die 'Monitor-Teilnehmereinrichtung' TLN2-M weitergeleitet wird.

Die 'Monitor-Teilnehmereinrichtung' TLN2-M reagiert auf den Empfang der drei Paketinformationen pim, pi1, pi3 wie folgt:
- Sie erkennt, daß in den ersten beiden empfangenen Rundsende-Paketinformationen pim, pi3 das Adreßerkennungsbit ae eine binäre "1"-Information aufweist, worauf die zuerst empfangene Rundsende-Paketinformation pim von der 'Monitor-Teilnehmereinrichtung' TLN2-M entfernt und die anschließend empfangene Rundsende-Paketinformation pi3 ohne weitere Bewertung an den zweiten Ringleitungsabschnitt RL2 weitergeleitet wird.
- Sie erkennt, daß in der zuletzt empfangenen Paketinformation pi1 das Adreßerkennungsbit ae eine binäre "O"-Information aufweist und schließt daraus, daß von der übermittlungsgemäß vor ihr liegenden Teilnehmereinrichtung TLN1 - in diesem Falle die erste Teilnehmereinrichtung TLN1 - die zuletzt empfangene Paketinformation pi1 ursprünglich erzeugt und übermittelt wurde. Dies bedeutet, daß alle Teilnehmereinrichtungen TLN des ringförmigen Netzes eine Rundsende-Paketinformation bildeten und das Informationsfeld der zuletzt empfangenen Paketinformation pi1 die Adreßinformationen a2, a3, a1 aller Teilnehmereinrichtungen TLN enthält. Diese Adreßinformationen a2, a3, a1 werden aus dem Informationsfeld kopiert und in eine Adressentabelle eingetragen. Somit liegt eine vollständige Adressentabelle vor, die einerseits die Adresseninformationen a2, a3, a1 enthält und bei der andererseits die Reihenfolge der Adresseninformationen die Reihenfolge bzw. die Position der Teilnehmereinrichtungen TLN in diesem ringförmigen Netz angibt. Diese Adressentabelle ist mittels geeigneter Verfahren an alle Teilnehmereinrichtungen TLN eines ringförmigen Netzes zu verteilen.

Die im ringförmigen Netz übermittelten Paketinformationen pim, pi3, pi2 werden nach einem Umlauf von denjenigen Teilnehmereinrichtungen TLN wieder entfernt, in denen die Paketinformationen generiert und erstmals ausgesendet wurden.

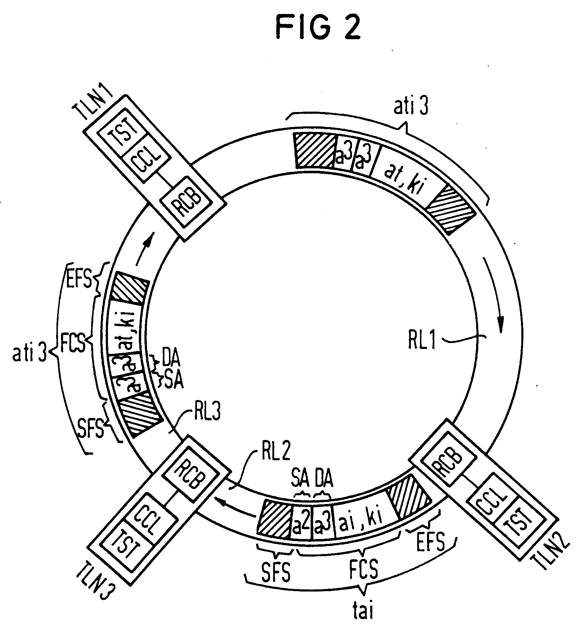

Das in Fig. 2 gezeigte ringförmige Netz entspricht hinsichtlich Anordnung und Funktionen der einzelnen Systemkomponenten dem ringförmigen Netz gemäß Fig. 1. Für das im folgenden erläuterte Feststellen des Auftretens derselben Teilnehmereinrichtungsadresse für eine Teilnehmereinrichtung im ringförmigen Netz ist wie in Fig. 1 die bei ANSI standardisierte Token Ring-Übermittlungsprozedur X 3.139 vorgesehen. Für das Ausführungsbeispiel sei angenommen, daß beispielsweise während des Bildens einer Adressentabelle in der dritten Teilnehmereinrichtung TLN3 eine Adreßtestanforderung gebildet wird. Aufgrund des Vorliegens einer Adreßtestanforderung wird in der dritten Teilnehmereinrichtung TLN3 eine Adreßtest-Paketinformation ati3 gebildet. Nach ANSI-Standard X 3.139 wird eine Paketinformation durch eine Paketrahmeninformation - in Fig. 2 durch eine Schraffur markiert - und eine FCS-Information gebildet. Die Paketrahmeninformation enthält eine Startrahmeninformation SFS, die der FCS-Information vorangestellt wird und eine Paketendeinformation EFS, die an die FCS-Information angefügt ist. Die FCS-Information besteht aus einem Informationsfeld, aus den Ursprungs- und Zieladreßfeldern SA, DA sowie aus einem Steuerfeld. Sowohl im Ursprungs- als auch im Zieladreßfeld DA dieser Adreßtest-Paketinformation ati3 ist die Teilnehmereinrichtungsadresse a3 der dritten Teilnehmereinrichtung TLN3 eingetragen. Dies bedeutet, daß die Adreßtest-Paketinformation ati3 gezielt an die eigene Teilnehmereinrichtung TLN3 adressiert ist. Im Informationsfeld wird eine Adreßtestinformation at eingetragen, wodurch diese Paketinformation als Adreßtest-Paketinformation ati bestimmt ist. Zusätzlich wird in dieses Informationsfeld eine Kennungsinformation ki eingefügt. Diese Kennungsinformation ki wird speziell für jede auszusendende Paketinformation ermittelt. Beispielsweise kann dies mit Hilfe eines Zufallsgenerators erfolgen, an dessen Ausgang eine zufällige Bitkombination bzw. Kennungsinformation ki vorliegt. Diese Kennungsinformation ki erleichtert in der dritten Teilnehmereinrichtung TLN3 das eindeutige Erkennen der an sie selbst gesandten Adreßtest-Paketinformation ati3. Die derart und gemäß ANSI X 3.139-Standard gebildete Adreßtest-Paketinformation ati3 wird von der Teilnehmereinrichtung TLN3 über die Ringkoppeleinrichtung RCB an den dritten Ringleitungsabschnitt RL3 übermittelt und gelangt über die folgende Ringkoppeleinrichtung RCB zur Zugriffseinrichtung CCL der ersten Teilnehmereinrichtung TLN1. Da die Adreßtest-Paketinformation ati3 nicht an die erste Teilnehmereinrichtung TLN1 adressiert ist, wird diese umgehend über die Ringkoppeleinrichtung RCB an den ersten Ringleitungsabschnitt RL1 übermittelt und gelangt über die folgende Ringkoppeleinrichtung RCB an die Zugriffseinrichtung CCL der zweiten Teilnehmereinrichtung TLN2-M. Für das Ausführungsbeispiel sei angenommen, daß die Teilnehmereinrichtungsadresse a2 der zweiten Teilnehmereinrichtung TLN2-M und der dritten Teilnehmereinrichtung TLN3 übereinstimmen - beispielsweise aufgrund einer Ringnetzstörung oder einer fehlerhaften Bedienereingabe bei der Netzinbetriebnahme. Abweichend vom ANSI X 3.139-Standard wird die Adreßtest-Paketinformation ati3 erst nach einer zusätzlichen Bewertung vom ringförmigen Netz entfernt, da in der zweiten Teilnehmereinrichtung TLN2-M zunächst angenommen wird, daß es sich um eine von ihr ausgesandte Adreßtest-Paketinformation handelt. Diese zusätzliche Bewertung, d. h. logische Überprüfungen der Adreßtest-Paketinformation und speziell der Kennungsinformation ki in der zweiten Teilnehmereinrichtung TLN2-M ergeben jedoch, daß diese Adreßtest-Paketinformation ati3 nicht von ihr ausgesandt wurde. In Abhängigkeit der Anschaltedauer - siehe Erläuterungen in der Beschreibungseinleitung - kann nun die zweite Teilnehmereinrichtung TLN2-M vom ringförmigen Netz geschaltet oder eine Adreßtestantwort-Paketinformation tai gebildet werden. Für das Ausführungsbeispiel sei angenommen, daß in der zweiten Teilnehmereinrichtung TLN2-M eine Adressentabelle vorliegt, was bedeutet, daß diese zweite Teilnehmereinrichtung TLN2-M bereits länger am ringförmigen Netz angeschaltet ist. Folglich wird in der zweiten Teilnehmereinrichtung TLN2-M gemäß ANSI-Standard X 3.139 eine Adreßtestantwork-Paketinformation tai gebildet und an den zweiten Ringleitungsabschnitt RL2 übermittelt. Hierbei ist im Zieladreßfeld DA die Adresse a3 derjenigen Teilnehmereinrichtung TLN3 eingetragen, die ursprünglich die Adreßtest-Paketinformation ati3 aussandte. Im Informationsfeld der Paketinformation tai ist die Adreßtestinformation at in eine Adreßtestantwortinformation ai geändert. Um eine eindeutige Zuordnung von ausgesandter Adreßtest-Paketinformation ati3 zu empfangener Adreßtestantwort-Paketinformation tai in der ursprünglich die Adreßtest-Paketinformation ati3 aussendende Teilnehmereinrichtung TLN3 zu ermöglichen, bleiben im Informationsfeld die ursprünglich ermittelten Kennungsinformationen ki eingetragen. Über den zweiten Ringleitungsabschnitt RL2 und die folgende Ringkoppeleinrichtung RCB gelangt die Adreßtestantwort-Paketinformation tai zur Zugriffseinrichtung CCL der dritten Teilnehmereinrichtung TLN3. In dieser wird festgestellt, daß es sich aufgrund der geänderten Adreßtestinformation at um eine Adreßtestantwort-Paketinformation tai handelt. Dies bedeutet, daß eine Teilnehmereinrichtung TLN im ringförmigen Netz vorhanden ist, die dieselbe Teilnehmereinrichtungsadresse a3 wie die dritte Teilnehmereinrichtung TLN3 aufweist und die nicht vom ringförmigen Netz geschaltet wurde.

Folglich wird die dritte Teilnehmereinrichtung TLN3 vom ringförgigen Netz geschaltet und ein Anschalten der dritten Teilnehmereinrichtung TLN3 an das ringförmige Netz erst nach Abändern ihrer Teilnehmereinrichtungsadresse durchgeführt. Dies bedeutet, daß das Bilden einer Adressentabelle im ringförmigen Netz unterbrochen und anschließend neu eingeleitet wird. Wird die abgeschaltete dritte Teilnehmereinrichtung TLN3 wieder an das ringförmige Netz geschaltet, wird das Bilden einer Adressentabelle im ringförmigen Netz erneut initialisiert bzw. eingeleitet.

Wird in die in der die ursprünglich die Adreßtest-Paketinformation ati3 aussendende Teilnehmereinrichtung TLN3 die von ihr ausgesandte Adreßtest-Paketinformation ati3 unverändert empfangen, so ist ihre Teilnehmereinrichtungsadresse a3 einmalig im ringförmigen Netz vorhanden. Das Bilden einer Adressentabelle kann anschließend durch Aussenden einer Adressenmeldeaufforderung fortgeführt werden. Im Rahmen des Bildens einer Adressentabelle wird im ringförmigen Netz von jeder Teilnehmereinrichtung TLN das Feststellen des Auftretens derselben Teilnehmereinrichtungsadresse a durchgeführt. Hierdurch wird sichergestellt, daß Adressentabellen gebildet werden, die keine gleichen Teilnehmereinrichtungsadressen a enthalten.

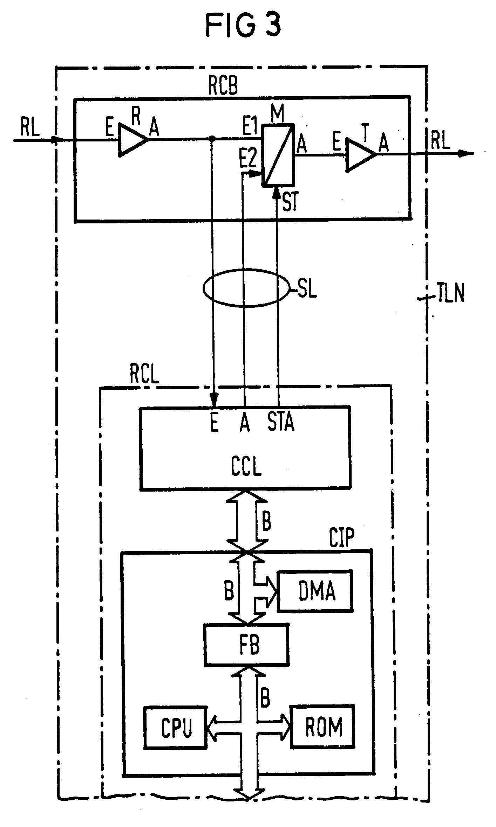

In Fig. 3 sind diejenigen Systemkomponenten einer Teilnehmereinrichtung TLN dargestellt, die das Bilden und Auswerten von Paketinformationen - und damit auch das Bilden einer Adressentabelle - durchführen. Die Teilnehmereinrichtung TLN ist aus einer Ringkoppeleinrichtung RCB, einer Ringsteuereinrichtung RCL und weiteren, nicht dargestellten, teilnehmereinrichtungsinterne Verfahren und Prozeduren steuernden Einrichtungen gebildet. Die Ringkoppeleinrichtung RCB kann in der Teilnehmereinrichtung TLN integriert oder extern - über eine entsprechende Stichleitung SL mit der Teilnehmereinrichtung TLN verbundenangeordnet sein. Die Ringleitung RL kann beispielhaft mittels optischer Lichtwellenleiter realisiert sein. Hierbei ist die übermittlungsrichtungsgemäß ankommende Ringleitung RL mit einem Eingang E einer optischen Empfängereinrichtung R verbunden. Der Ausgang dieser Empfängereinrichtung R ist über entsprechend angeordnete Leitungen auf einen ersten Eingang E1 einer Multiplexeinrichtung M und auf einen Eingang E einer in der Ringsteuereinrichtung RCL angeordneten Zugriffseinrichtung CCL geführt. Ein zweiter Eingang E2 der Multiplexeinrichtung M ist mit einem Ausgang A der Zugriffseinrichtung CCL verbunden. Die Zugriffseinrichtung CCL steuert mittels ihres Steuerausganges STA über eine entsprechende Verbindung und dem Steuereingang ST die Multiplexeinrichtung M. Der Ausgang A der Multiplexeinrichtung M ist auf einen Eingang E einer optischen Sendeeinrichtung T geleitet. An dessen Ausgang A ist die übermittlungsrichtungsgemäß abgehende Ringleitung RL angeschlossen. Der Ringkoppeleinrichtung RCB sind folgende Aufgaben zugeordnet:
- Regenerierung der auf der Ringleitung RL ankommenden Informationssignale
- Weiterleiten der Informationssignale an die Ringsteuereinrichtung RCL
- Einfügen der von der Ringsteuereinrichtung RCL ankommenden Informationssignale in den Informationsstrom des ringförmigen Netzes mittels des Multiplexers M
- bei gestörter Ringsteuereinrichtung RCL direktes Weiterleiten der ankommenden Informationssignale auf die übermittlungsrichtungsgemäß abgehende Ringleitung RL mittels der Multiplexeinrichtung M, der über den Steuereingang ST entsprechend gesteuert wird.

Die Systemkomponenten der Ringkoppeleinrichtung RCB können beispielsweise wie folgt realisiert sein:
- Multiplexer M: 74 F 157 (Fast-Technik von Fairchild)
- optische Empfangseinrichtung R: Siemens V 42253-H4-B4
- optische Sendeeinrichtung T: Siemens V 42253-G4-B5
In der Ringsteuereinrichtung RCL ist die Zugriffseinrichtung CCL und die Kanalschnittstelleneinrichtung CIP angeordnet. Die Zugriffseinrichtung CCL steuert den Zugriff einer Teilnehmereinrichtung TLN auf das ringförmige Netz. Dieser Zugriff erfolgt beispielsweise nach einem Zugriffsprotokoll gemäß ANSI/IEEE-Standard 802.5. Die Zugriffseinrichtung CCL kann mittels eines integrierten Schaltkreises von Texas Instruments, TMS 380, realisiert sein. Dieser integrierte Schaltkreis bildet und bewertet die Ringinformationen gemäß dem vorher erwähnten Zugriffsprotokoll von ANSI/IEEE-Standard 802.5. Über ein in bekannter Weise angeordnetes Busleitungssystem B ist die Zugriffseinrichtung CCL mit einer Kanalschnittstellensteuereinrichtung CIP verbunden. Diese Kanalschnittstellensteuereinrichtung CIP stellt das Bindeglied zu den teilnehmereinrichtungsinternen Einrichtungen dar. In dieser Einrichtung wird im wesentlichen die Bewertung der von beiden Richtungen ankommenden Informationen durchgeführt werden und gegebenenfalls weitere Informationen gebildet und an die jeweils gegenüberliegende Einrichtung weitergeleitet. Diese Kanalschnittstellensteuereinrichtung CIP kann beispielsweise mittels der Systemkomponenten:
- Zentralprozessor CPU (Zentralsteuerung)
- Read only Memory ROM (Festwertspeicher)
- Rahmen-Buffer FB (Rahmenausgleichsspeicher) und
- Direct Memory Access DMA (Steuerbaustein für direkten Speicherzugriff)
gebildet sein. Die Verbindung der einzelnen Systemkomponenten untereinander erfolgt über für Mikroprozessorsysteme übliche und in bekannter Weise angeordnete Busleitungssysteme B.

Der Zentralprozessor CPU kann mittels des Mikroprozessorsystems der Fa. Siemens, SAB 8088, das 'Read only Memory' mittels des integrierten Schaltkreises SAB 2764a, der 'Frame Buffer' mittels des integrierten Schaltkreises SAB 2114a1 und das 'Direct Memory Access' mittels des integrierten Schaltkreises SAB 8237 realisiert sein.

## Patentansprüche

1. Verfahren zum Bilden einer Adressentabelle in einem ringförmigen Kommunikationsnetz mit mindestens zwei jeweils mit einer Zugriffseinrichtung ausgestatteten Teilnehmereinrichtungen, wobei die Informationen paketweise übermittelt werden und in einer ursprünglich Paketinformationen bildenden Teilnehmereinrichtung vor dem Aussenden einem Adreßerkennungsbit einer jeder Paketinformation zugeordneten Paketrahmeninformation eine definierte binäre Information zugeordnet wird und in einer der folgenden Teilnehmereinrichtungen nach dem Übereinstimmen der in der Paketrahmeninformation angegebenen Ziel- bzw. Gruppenadresse mit der jeweils eigenen Teilnehmereinrichtungs-Adresse bzw. Gruppenadresse die binäre Information des Adreßerkennungsbits geändert wird,
**dadurch gekennzeichnet,**
daß nach jedem Konfigurieren im ringförmigen Netz von einer zumindest zeitweise aktuell das ringförmige Netz überwachenden Teilnehmereinrichtung (TLN2-M) eine mit einer Adressenmeldeaufforderung (aa) und der hinzufügbaren, eigenen Teilnehmereinrichtungs-Adresse versehene Rundsendepaketinformation (pim) ausgesendet wird,
daß in jeder der folgenden Teilnehmereinrichtungen (TLN) nach dem Empfang einer Rundsendepaketinformation (pim, pi3, pi1) mit unverändertem Adreßerkennungsbit (ae) jeweils eine weitere Rundsendepaketinformation (pim, pi3, pi1) derart gebildet wird, daß in ein Informationsfeld der Rundsendepaketinformation (pim, pi3, pi1) eine Adressenmeldeaufforderung (aa) und die von der vorhergehenden Teilnehmereinrichtung (TLN) im Informationsfeld empfangenen Adreßinformationen (a) eingetragen sowie jeweils die Adreßinformation derjenigen Teilnehmereinrichtung (TLN) hinzugefügt wird, die der der zuletzt im Informationsfeld eingetragenen Adreßinformation (a) zugeordneten Teilnehmereinrichtung (TLN) in Übertragungsrichtung folgt,
daß in der aktuell das ringförmige Netz überwachenden Teilnehmereinrichtung (TLN2-M) nach dem Empfang einer Rundsendepaketinformation (pim, pi3, pi1) mit unverändertem Adreßerkennungsbit (ae) die Adresseninformationen (a) im zugehörigen Informationsfeld als die Position der Teilnehmereinrichtungen (TLN) im ringförmigen Netz repräsentierende aktuelle Adressentabelle zur Verfügung steht.

2. Verfahren nach Anspruch 1,
**dadurch gekennzeichnet,**
daß die Adreßinformation, die den empfangenen Adreßinformationen durch die jeweilige Teilnehmereinrichtung hinzugefügt wird, der Adresse der jeweiligen oder der übermittlungsrichtungsgemäß vorhergehenden Teilnehmereinrichtung entspricht.

3. Verfahren nach Anspruch 2,
**dadurch gekennzeichnet,**
daß die Adreßinformation der übermittlungsrichtungsgemäß vorhergehenden Teilnehmereinrichtung dem Ursprungsadressen-Informationsfeld entnehmbar ist.

4. Verfahren nach einem der vorhergehenden Ansprüche,
**dadurch gekennzeichnet,**
daß in der das ringförmige Netz überwachenden Teilnehmereinrichtung (TLN2-M) in das Informationsfeld jeder mit einer Adressenmeldeaufforderung (aa) versehenen Rundsendepaketinformation (rsi) eine Numerierungsinformation eintragbar ist, die von den weiteren Teilnehmereinrichtungen (TLN) des ringförmigen Netzes unverändert weitergeleitet wird.

5. Verfahren nach einem der vorhergehenden Ansprüche,
**dadurch gekennzeichnet,**
daß die Teilnehmereinrichtung-Adresseninformation (a) mittels der jeweiligen Teilnehmereinrichtungs-Adresse und weiterer Subteilnehmereinrichtungs-Adressen gebildet wird.

6. Verfahren nach einem der vorhergehenden Ansprüche,
**dadurch gekennzeichnet,**
daß die Teilnehmereinrichtung-Adresseninformation (a) zusätzlich durch eine teilnehmereinrichtungsinterne Konfigurationsinformation gebildet wird.

7. Verfahren nach einem der vorhergehenden Ansprüche,
**dadurch gekennzeichnet,**
daß diejenige Teilnehmereinrichtung (TLN) mindestens für die Dauer des Bildens der Adressentabelle als die das ringförmige Netz überwachende Teilnehmereinrichtung (TLN2-M) bestimmt wird, die nach einer Störung im ringförmigen Netz erstmals eine Zugriffsinformation - 'Token' - generiert und an das ringförmige Netz sendet.

8. Verfahren nach einem der vorhergehenden Ansprüche,
**dadurch gekennzeichnet,**
daß zusätzlich zum Adreßerkennungsbit (ae) ein Kopierbit in die Paketrahmeninformation einer im Sinne des Bildens einer Adressentabelle zu übermittelnden Rundsendepaketinformation (pim, pi3, pi1) eingefügt wird, wobei dem Kopierbit eine vorgegebene binäre Information zugeordnet wird, daß nach dem Kopieren der im Informationsfeld der Rundsendepaketinformation (pim, pi3, pi1) enthaltenen Informationen durch die jeweils folgende Teilnehmereinrichtung (TLN) die binäre Information des Kopierbits geändert wird, und daß in einer Teilnehmereinrichtung (TLN) nach dem Empfang einer von ihr im Sinne des Bildens einer Adressentabelle ausgesandten und mit unverändertem Kopierbit empfangenen Rundsendepaketinformation (pim, pi3, pi1) erneut eine mit Adressenmelde- und Adresseninformationen (aa, a) versehene Rundsendepaketinformation (pim, pi3, pi1) gebildet und ausgesendet wird.

9. Verfahren nach einem der vorhergehenden Ansprüche,
**dadurch gekennzeichnet,**
daß in der jeweiligen Teilnehmereinrichtung (TLN) vor dem erstmaligen Aussenden einer im Sinne des Bildens einer Adressentabelle vorgesehenen Rundsendepaketinformation (pim, pi3, pi1) eine Adreßtestanforderung im Sinne des Feststellens des Auftretens derselben Teilnehmereinrichtungsadresse (aa) der jeweiligen Teilnehmereinrichtung (TLN) im ringförmigen Netz gebildet wird.

10. Verfahren nach Anspruch 9,
**dadurch gekennzeichnet,**
daß in allen im ringförmigen Netz angeordneten Teilnehmereinrichtungen (TLN) jeweils von ihnen ausgesandte Paketinformationen empfangen, bewertet und anschließend vom ringförmigen Netz entfernt werden, daß nach einer Adreßtestanforderung in der jeweiligen Teilnehmereinrichtung (TLN) eine Adreßtest-Paketinformation (ati3) gebildet wird, die im Zieladreßfeld die eigene Teilnehmereinrichtungsadresse (a3) enthält, daß diese Adreßtest-Paketinformation (ati) über das ringförmige Netz übermittelt wird,
- daß in der jeweiligen Teilnehmereinrichtung (TLN3) nach dem Empfang einer von ihr ausgesandten Adreßtest-Paketinformation (ati3) eine Information gebildet wird, die das einmalige Vorhandensein der jeweiligen Teilnehmereinrichtungsadresse (a3) im ringförmigen Netz repräsentiert,
- daß in einer Teilnehmereinrichtung (TLN2) eine empfangene Adreßtest-Paketinformation (ati3), die nicht von ihr ausgesandt wurde, jedoch dieselbe Teilnehmereinrichtungsadresse (a3) aufweist, vom ringförmigen Netz entfernt wird, daß die jeweilige Teilnehmereinrichtung (TLN2) in Abhängigkeit von ihrer Ringanschaltedauer entweder vom ringförmigen Netz geschaltet oder in dieser eine Adreßtestantwort-Paketinformation (tai) gebildet und ausgesendet wird, die im Zieladreßfeld (DA) die Teilnehmereinrichtungsadresse (a3) der ursprünglich die Adreßtest-Paketinformation (ati3) aussendende Teilnehmereinrichtung (TLN) und im Informationsfeld eine Adreßtestantwort-Information (ai) enthält,
daß in der die ursprünglich die Adreßtest-Paketinformation (ati3) aussendende Teilnehmereinrichtung (TLN3) nach Empfang von Adreßtestantwort-Paketinformationen (tai) eine Information gebildet wird, die das Vorliegen zumindest einer dieselbe Adresse aufweisende und nicht vom ringförmigen Netz geschalteten Teilnehmereinrichtung (TLN2) anzeigt, daß die ursprünglich Adreßtest-Paketinformation (ati) aussendende Teilnehmereinrichtung (TLN3) vom ringförmigen Netz geschaltet wird,
- daß in der die ursprünglich die Adreßtest-Paketinformationen (ati) aussendenden Teilnehmereinrichtung (TLN3) nach einer Überwachungszeit, in der weder die von ihr ausgesandte Adreßtest-Paketinformation (ati3) noch Adreßtestantwort-Paketinformation (tai) empfangen wurde, erneut das Bilden einer Adressentabelle eingeleitet wird.

11. Verfahren nach Anspruch 9 oder 10,
**dadurch gekennzeichnet,**
daß in einer Teilnehmereinrichtung (TLN) nach n-maligem Aussenden einer Adreßtest-Paketinformation (ati) und nach n Überwachungszeiten, in denen weder die von ihr ausgesandten Adreßtestnoch Adreßtestantwort-Paketinformationen (ati, tai) empfangen wurden, erneut das Bilden einer Adressentabelle eingeleitet wird.

12. Verfahren nach einem der Ansprüche 9 bis 11,
**dadurch gekennzeichnet,**
daß sowohl in die Adreßtest- als auch in die Adreßtestantwort-Paketinformation (ati, tai) in der jeweiligen diese Paketinformationen (ati, tai) aussendenden Teilnehmereinrichtung (TLN) im Sinne des eindeutigen Erkennens einer von ihr ausgesandten Paketinformation (ati, tai) aus mehreren empfangenen, die eigene Teilnehmereinrichtungsadresse (a) aufweisenden Paketinformationen (ati, tai) eine Kennungsinformation (ki) eingefügt wird.

13. Verfahren nach einem der vorhergehenden Ansprüche,
**dadurch gekennzeichnet,**
daß in der zumindest zeitweise aktuell das ringförmige Netz überwachenden Teilnehmereinrichtung (TLN2-M) eine die aktuelle Adressentabelle enthaltende Rundsendepaketinformation gebildet und ausgesendet wird und daß von allen im ringförmigen Netz angeordneten Teilnehmereinrichtungen (TLN) die Adressentabelle aus der empfangenen Rundsendepaketinformation kopiert wird.

14. Verfahren nach Anspruch 13,
**dadurch gekennzeichnet,**
daß in der zumindest zeitweise das ringförmige Netz überwachenden Teilnehmereinrichtung (TLN2-M) einem in die Rundsendepaketinformation eingefügten Kopieranzeigebit eine vorgegebene binäre Information zugeordnet wird, daß die binäre Information des Kopieranzeigebits von denjenigen Teilnehmereinrichtungen (TLN) im ringförmigen Netz verändert wird, die die aktuelle Adressentabelle nicht kopieren konnten, daß in der zumindest zeitweise das ringförmige Netz überwachenden Teilnehmereinrichtung (TLN2-M) nach Empfang einer von ihr ausgesandten Rundsendepaketinformation mit verändertem Kopieranzeigebit erneut eine Rundsendepaketinformation ausgesendet wird, daß nach n-maligem Aussenden einer Rundsendepaketinformation in der das ringförmige Netz überwachenden Teilnehmereinrichtung (TLN2-M) für jede in der Adressentabelle angezeigte Teilnehmereinrichtung (TLN) eine die aktuelle Adressentabelle enthaltende und an die jeweilige Teilnehmereinrichtung (TLN) adressierte Paketinformation (pi) gebildet und über das ringförmige Netz übermittelt wird.

## Claims

1. Method for forming an address table in a ring communications network having at least two subscriber devices which are each equipped with an access device, the information items being transmitted in packets and a defined binary information item being allocated to an address tag bit of a packet frame information item, which is allocated to each packet information item, in a subscriber device, which originally forms packet information items, before transmission, and the binary information item of the address tag bit being changed in one of the following subscriber devices after correspondence of the destination or group address, which is specified in the packet frame information item, with the respectively dedicated subscriber device address or group address, characterized in that a broadcast packet information item (pim), which is provided with an address signalling request (aa) and the dedicated subscriber device address which can be appended, is transmitted after every configuration in the ring network by a subscriber device (TLN2-M) which is at least partially currently monitoring the ring network, in that in each case one further broadcast packet information item (pim, pi3, pi1) is formed in each of the following subscriber devices (TLN) after reception of a broadcast packet information item (pim, pi3, pi1) with an unchanged address tag bit (ae), in such a manner that an address signalling request (aa) and the address information items (a) received by the preceding subscriber device (TLN) in the information field are entered in an information field in the broadcast packet information item (pim, pi3, pi1) and the address information is in each case appended to that subscriber device (TLN) which follows, in the transmission direction, the subscriber device (TLN) allocated to the address information item (a) entered last in the information field, in that the address information items (a) in the associated information field are available, as a current address table representing the position of the subscriber devices (TLN) in the ring network, in the subscriber device (TLN2-M) which is currently monitoring the ring network, after reception of a broadcast packet information item (pim, pi3, pi1) with an unchanged address tag bit (ae).

2. Method according to Claim 1, characterized in that the address information item which is appended to the received address information items by the respective subscriber device corresponds to the address of the respective subscriber device or of the preceding subscriber device in terms of the transmission direction.

3. Method according to Claim 2, characterized in that the address information item of the preceding subscriber device in terms of the transmission direction can be taken from the origin address information field.

4. Method according to one of the preceding claims, characterized in that a numbering information item, which is passed on unchanged by the further subscriber devices (TLN) in the ring network, can be entered into the information field of each broadcast packet information item (rsi) which is provided with an address signalling request (aa), in the subscriber device (TLN2-M) which is monitoring the ring network.

5. Method according to one of the preceding claims, characterized in that the subscriber device address information item (a) is formed by means of the respective subscriber device address and further sub-subscriber device addresses.

6. Method according to one of the preceding claims, characterized in that the subscriber device address information item (a) is additionally formed by a configuration information item which is internal to a subscriber device.

7. Method according to one of the preceding claims, characterized in that that subscriber device (TLN) is defined, at least for the duration of the formation of the address table, as the subscriber device (TLN2-M) which is monitoring the ring network and which, for the first time, generates an access information item - 'token' - after a disturbance in the ring network, and transmits it to the ring network.

8. Method according to one of the preceding claims, characterized in that, in addition to the address tag bit (ae), a copy bit is inserted in the packet frame information item of a broadcast packet information item (pim, pi3, pi1) which is to be transmitted in the sense of forming an address table, the copy bit having allocated to it a predetermined binary information item, in that, after copying the information items contained in the information field of the broadcast packet information (pim, pi3, pi1), the binary information item of the copy bit is changed by the respectively following subscriber device (TLN), and in that a broadcast packet information item (pim, pi3, pi1), which is provided with address signalling information items and address information items (aa, a), is once again formed and transmitted in a subscriber device (TLN) after reception of a broadcast packet information item (pim, pi3, pi1) which was transmitted by it in the sense of forming an address table and is received with the copy bit unchanged.

9. Method according to one of the preceding claims, characterized in that an address test request, in the sense of confirming the occurrence of the same subscriber device address (aa) of the respective subscriber device (TLN) in the ring network, is formed in the respective subscriber device (TLN) before the initial transmission of a broadcast packet information item (pim, pi3, pi1) which is provided in the sense of forming an address table.

10. Method according to Claim 9, characterized in that, in all the subscriber devices (TLN) which are arranged in the ring network, packet information items which are in each case transmitted by them are received, evaluated and subsequently removed from the ring network, in that, after an address test request in the respective subscriber device (TLN), an address test packet information item (ati3) is formed which contains the dedicated subscriber device address (a3) in the destination address field, in that this address test packet information item (ati) is transmitted via the ring network, in that an information item which represents the presence on one occasion of the respective subscriber device address (a3) in the ring network is formed in the respective subscriber device (TLN3) after reception of an address test packet information item (ati3) transmitted by it, in that a received address test packet information item (ati3), which was not transmitted by it but nevertheless has the same subscriber device address (a3), is removed from the ring network in a subscriber device (TLN2), in that the respective subscriber device (TLN2) is either switched by the ring network or an address test response packet information item (tai) is formed in and transmitted from said subscriber device (TLN2) as a function of its ring connection duration, which address test response packet information item (tai) contains, in the destination address field (DA), the subscriber device address (a3) of the subscriber device (TLN) which originally transmits the address test packet information item (ati3) and contains an address test response information item (ai) in the information field, in that an information item which indicates the presence of at least one subscriber device (TLN2) which has the same address and is not switched by the ring network is formed in the subscriber device (TLN3) which originally transmits the address test packet information item (ati3), after reception of the address test response packet information items (tai), in that the subscriber device (TLN3) which originally transmits the address test packet information item (ati) is switched by the ring network, in that the formation of an address table is once again initiated in the subscriber device (TLN3) which originally transmits the address test packet information items (ati), after a monitoring time in which neither the address test packet information item (ati3) transmitted by it nor the address test response packet information item (tai) has been received.

11. Method according to Claim 9 or 10, characterized in that the formation of an address table is initiated again in a subscriber device (TLN) after transmitting an address test packet information item (ati) n times and after n monitoring times in which neither the address test packet information item (ati) transmitted by it nor the address test response packet information item (tai) have been received.

12. Method according to one of Claims 9 to 11, characterized in that a tag information item (ki) is inserted both in the address test packet information item (ati) and in the address test response packet information item (tai) in the respective subscriber device (TLN) which transmits these packet information items (ati, tai), in the sense of unambiguous recognition of one packet information item (ati, tai) transmitted by it from a plurality of packet information items (ati, tai) which have been received and have the dedicated subscriber device address (a).

13. Method according to one of the preceding claims, characterized in that a broadcast packet information item which contains the current address table is formed and transmitted in the subscriber device (TLN2-M) which is at least partially currently monitoring the ring network, and in that the address table is copied from the received broadcast packet information item by all the subscriber devices (TLN) which are arranged in the ring network.

14. Method according to Claim 13, characterized in that a predetermined binary information item is allocated to a copy indication bit, which is inserted in the broadcast packet information item, in the subscriber device (TLN2-M) which is at least partially monitoring the ring network, in that the binary information item of the copy indication bit is changed by those subscriber devices (TLN) in the ring network which were not able to copy the current address table, in that a broadcast packet information item is once again transmitted in the subscriber device (TLN2-M) which is at least partially monitoring the ring network, after reception of a broadcast packet information item transmitted by it, with a changed copy indication bit, in that a packet information item (pi) which contains the current address table and is addressed to the respective subscriber device (TLN) is formed and transmitted via the ring network, after transmitting a broadcast packet information item n times in the subscriber device (TLN2-M) which is monitoring the ring network, for each subscriber device (TLN) which is indicated in the address table.

## Revendications

1. Procédé pour former une table d'adresses dans un réseau de communication en anneau comportant au moins deux postes d'abonnés équipés chacun d'un dispositif d'accès, selon lequel les informations sont retransmises par paquets et, dans un poste d'abonné formant initialement des informations en paquets, une information binaire définie est associée, avant l'émission d'un bit d'identification d'adresse, à une information de trame de paquet associée à chaque information de paquet, et l'information binaire du bit d'identification d'adresse est modifiée, dans l'un des postes d'abonnés suivants, après coïncidence de l'adresse de destination ou de l'adresse de groupe, indiquée dans l'information de trame de paquet, avec l'adresse particulière respective du poste d'abonné ou l'adresse particulière respective de groupe,
caractérisé par le fait
qu'après chaque opération de configuration dans le réseau en anneau, une information de paquet d'émission omnidirectionnelle (pim), pourvue d'une demande (aa) de signalisation d'adresse et de l'adresse propre, qui doit être jointe, du poste d'abonné, est émise par un poste d'abonné (TLN2-M) qui contrôle actuellement, au moins de façon temporaire, le réseau en anneau,
que dans chacun des postes d'abonnés (TLN) suivants, après la réception d'une information de paquet d'émission omnidirectionnelle (pim, pi3, pi1) possédant un bit d'identification d'adresse (ae) inchangé, respectivement une autre information de paquet d'émission omnidirectionnelle (pim, pi3, pi1) est formée de telle sorte qu'une demande (aa) de signalisation d'adresse et les informations d'adresses (a) reçues dans la zone d'information par le poste d'abonné (TLN) précédent, sont introduites dans une zone de l'information de paquet d'émission omnidirectionnelle (pim, pi3, pi1), et que l'information d'adresse du poste d'abonné (TLN), qui, dans le sens de transmission, succède au poste d'abonné (TLN) associé à l'information d'adresse (a) introduite en dernier lieu dans la zone d'information, est ajoutée,
que dans le poste d'abonné (TLN2-M), qui contrôle actuellement le réseau en anneau, après réception d'une information de paquet d'émission omnidirectionnelle (pim, pi3, pi1) avec un bit d'identification d'adresse (ae) inchangé, les informations d'adresses (a) dans la zone associée d'informations sont disponibles en tant que tableau actuel d'adresses représentant la position des postes d'abonnés (TLN) dans le réseau en anneau.

2. Procédé suivant la revendication 1, caractérisé par le fait que l'information d'adresse qui est ajoutée par le poste d'abonné respectif aux informations d'adresses reçues, correspond à l'adresse du poste d'abonné respectif ou du poste d'abonné précédent dans le sens de transmission.

3. Procédé suivant la revendication 2, caractérisé par le fait que l'information d'adresse du poste d'abonné précédent dans le sens de transmission peut être prélevée de la zone d'informations d'adresses d'origine.

4. Procédé suivant l'une des revendications précédentes, caractérisé par le fait que dans le poste d'abonné (TLN2-M) qui contrôle le réseau en anneau, dans la zone de chaque information de paquet d'émission omnidirectionnel (rsi), qui est pourvue d'une demande (aa) de signalisation d'adresse, peut être introduite une information de numérotation, qui est retransmise d'une manière inchangée par les autres postes d'abonnés (TLN) du réseau en anneau.

5. Procédé suivant l'une des revendications précédentes, caractérisé par le fait que l'information d'adresse (a) du poste d'abonné est formée au moyen de l'adresse respective du poste d'abonné et d'autres adresses de postes d'abonnés secondaires.

6. Procédé suivant l'une des revendications précédentes, caractérisé par le fait que l'information d'adresse (a) du poste d'abonné est formée en supplément par une information de configuration qui est interne au poste d'abonné.

7. Procédé suivant l'une des revendications précédentes, caractérisé par le fait que le poste d'abonné (TLN), qui, après une perturbation dans le réseau en anneau, produit pour la première fois une information d'accès - "jeton" - et l'envoie au réseau en anneau, est déterminé au moins pendant la durée de la formation du tableau d'adresses, comme étant le poste d'abonné (TLN2-M) qui contrôle le réseau en anneau.

8. Procédé suivant l'une des revendications précédentes, caractérisé par le fait qu'en plus du bit d'identification d'adresse (ae), un bit de copiage est inséré dans l'information de trame de paquet d'une information de paquet d'émission omnidirectionnelle (pim, pi3, pi1) devant être retransmise dans le sens de la formation d'un tableau d'adresses, une information binaire prédéterminée étant associée au bit de copiage, qu'après le copiage des informations contenues dans la zone de l'information de paquet d'émission omnidirectionnelle (pim, pi3, pi1), par le poste d'abonné (TLN) respectivement suivant, l'information binaire du bit de copiage est modifiée, et que dans un poste d'abonné (TLN), après la réception d'une information de paquet d'émission omnidirectionnelle (pim, pi3, pi1) émise par ce poste dans le sens de la formation d'un tableau d'adresses et reçue avec un bit de copiage inchangé, une information de paquet d'émission omnidirectionnelle (pim, pi3, pi1) pourvue d'informations (aa, a) de signalisation d'adresses et d'adresses est à nouveau formée et émise.

9. Procédé suivant l'une des revendications précédentes, caractérisé par le fait que dans le poste d'abonné (TLN) respectif, avant la première émission d'une information de paquet d'émission omnidirectionnelle (pim, pi3, pi1) prévue dans le sens de la formation d'un tableau d'adresses, une demande de test d'adresse est formée dans le sens de la détermination de l'apparition de la même adresse (aa) du poste d'abonné (TLN) respectif dans le réseau en anneau.

10. Procédé suivant la revendication 9, caractérisé par le fait que dans tous les postes d'abonnés (TLN) disposés dans le réseau en anneau, des informations en paquets, respectivement émises par ces postes d'abonnés, sont reçues, évaluées et ensuite prélevées du réseau en anneau, qu'après une demande de test d'adresse, dans le poste d'abonné (TLN) respectif est formée une information de paquet de test d'adresse (ati3), qui contient, dans la zone d'adresses de destination, l'adresse propre (a3) du poste d'abonné, que cette information de paquet de test d'adresse (ati) est retransmise par l'intermédiaire du réseau en anneau,
- que dans le poste d'abonné (TLN3) respectif, après la réception d'une information de paquet de test d'adresse (ati3) émise par ce poste d'abonné est formée une information qui représente la présence unique de l'adresse respective (a3) du poste d'abonné dans le réseau en anneau,
- que dans un poste d'abonné (TLN2), une information de paquet de test d'adresse (ati3) reçue, qui n'a pas été émise par ce poste d'abonné, mais possède la même adresse (a3) du poste d'abonné, est retirée du réseau en anneau, que le poste d'abonné respectif (TLN2) est branché, en fonction de sa durée de raccordement dans l'anneau, par le réseau en anneau ou que dans ce poste d'abonné est formée et émise une information de paquet de réponse de test d'adresse (tai), qui contient, dans la zone d'adresses de destination (DA), l'adresse (a3) du poste d'abonné (TLN) qui a émis initialement l'information de paquet de test d'adresse (ati3), et contient, dans la zone d'informations, une information de réponse au test d'adresse (ai),
- que dans le poste d'abonné (TLN3) qui a émis initialement l'information de paquet de test d'adresse (ati3), après la réception d'informations de paquet de réponse au test d'adresse (tai) est formée une information qui indique la présence d'au moins un poste d'abonné (TLN2), que le poste d'abonné (TLN3), qui a émis initialement l'information de paquet de test d'adresse (ati), est raccordé par le réseau en anneau,
- que dans le poste d'abonné (TLN3), qui a émis initialement les informations de paquet de test d'adresse (ati), après une durée de contrôle pendant laquelle ni l'information de paquet de test d'adresse (ati3), émise par ce poste d'abonné, ni l'information de paquet de réponse au test d'adresse (tai) n'ont été reçues, la formation d'un tableau d'adresses est à nouveau déclenchée.

11. Procédé suivant la revendication 9 ou 10, caractérisé par le fait que dans un poste d'abonné (TLN), après n émissions d'une information de paquet de test d'adresse (ai2) et après n durées de contrôle, pendant lesquelles ni l'information de paquet de test d'adresse (ati) émise par ce poste d'abonné, ni l'information de paquet de réponse au test d'adresse (tai) n'ont été reçues, la formation d'un tableau d'adresses est à nouveau déclenchée.

12. Procédé suivant l'une des revendications 9 à 11, caractérisé par le fait qu'une information de caractérisation (ki) est insérée aussi bien dans l'information de paquet de test d'adresse que dans l'information de paquet de réponse au test d'adresse (ati, tai), dans le poste d'abonné (TLN) respectif qui émet ces informations de paquet (ati, tai), dans le sens d'une identification parfaite d'une information de paquet (ati, tai), émise par ce poste d'abonné, parmi plusieurs informations de paquet reçues (ati, tai) possédant l'adresse propre (a) du poste d'abonné.

13. Procédé suivant l'une des revendications précédentes, caractérisé par le fait qu'une information de paquet d'émission omnidirectionnelle, qui contient le tableau actuel d'adresses, est formée dans le poste d'abonné (TLN2-M) qui contrôle actuellement, au moins de façon temporaire, le réseau en anneau, et que le tableau d'adresses est copié à partir de l'information de paquet d'émission omnidirectionnelle reçue, par tous les postes d'abonnés (TLN) disposés dans le réseau en anneau.

14. Procédé suivant la revendication 13, caractérisé par le fait que dans le poste d'abonné (TLN2-M), qui contrôle au moins temporairement le réseau en anneau, une information binaire prédéterminée est associée à un bit d'indication de copiage inséré dans l'information de paquet d'émission omnidirectionnelle, que l'information binaire du bit d'indication de copiage est modifiée, dans le réseau en anneau, par les postes d'abonnés (TLN), qui n'ont pas pu copier le tableau actuel d'adresses, que dans le poste d'abonné (TLN2-M) qui contrôle au moins temporairement le réseau en anneau, après la réception d'une information de paquet d'émission omnidirectionnelle émise par ce poste d'abonné avec un bit d'indication de copiage modifié, une information de paquet d'émission omnidirectionnelle est à nouveau émise, qu'après n émissions d'une information de paquet d'émission omnidirectionnelle dans le poste d'abonné (TLN2-M) contrôlant le réseau en anneau, pour chaque poste d'abonné (TLN) indiqué dans le tableau d'adresses, une information de paquet (pi), qui contient le tableau actuel d'adresses et est adressée au poste d'abonné respectif (TLN), est formée et est retransmise par l'intermédiaire du réseau en anneau.
